# EUROPÄISCHE PATENTANMELDUNG

(11) **EP 3 879 128 A1**
(43) Veröffentlichungstag der Anmeldung: **15.09.2021**
(21) Anmeldenummer: 20161702.4
(22) Anmeldetag: 09.03.2020
(51) Int. Cl.: F16B 7/04

(54) **VORRICHTUNG ZUR VERBINDUNG EINER ERSTEN UND EINER ZWEITEN SCHIENE, SOWIE SYSTEM UMFASSEND EINE SOLCHE VORRICHTUNG UND EINE ERSTE UND EINE ZWEITE SCHIENE**

(71) Anmelder: Hilti Aktiengesellschaft, 9494 Schaan (LI)
(72) Erfinder: Möller, Friedemann, 81375 München (DE); Taack-Trakranen, John Van, 81475 Muenchen (DE)
(74) Vertreter: Hilti Aktiengesellschaft Corporate Intellectual Property

(57) **Zusammenfassung**

Die vorliegende Erfindung betrifft eine Vorrichtung (10) zur Verbindung einer ersten Schiene (1) und einer zweiten Schiene (2). Die Vorrichtung (10) kann vorzugsweise auch als Schnittstelle bezeichnet werden, wobei die zu verbindenden Schienen (1,2) innen hohl ausgebildet und dazu eingerichtet sind, einen Bohrständer zur Aufnahme eines Werkzeuggeräts zu bilden, wobei die Vorrichtung im Verwendungsfall in einem von Innenflächen (5) der Schienen (1,2) gebildeten Hohlraum (4) vorliegen kann. Die Schnittstelle ist dadurch gekennzeichnet, dass die Vorrichtung (10) mindestens eine Führungsfläche (3) aufweist, wobei die mindestens eine Führungsfläche (3) mit einem spezifischen Führungsdurchmesser korrespondiert und von einer Metallbuchse gebildet wird. In einem zweiten Aspekt betrifft die Erfindung ein System, das eine vorgeschlagene Vorrichtung, sowie eine erste Schiene und eine zweite Schiene umfasst.

## Beschreibung

Die vorliegende Erfindung betrifft eine Vorrichtung zur Verbindung einer ersten und einer zweiten Schiene. Die Vorrichtung kann vorzugsweise auch als Schnittstelle bezeichnet werden, wobei die zu verbindenden Schienen innen hohl ausgebildet und dazu eingerichtet sind, einen Bohrständer zur Aufnahme eines Werkzeuggeräts zu bilden, wobei die Vorrichtung im Verwendungsfall in einem von Innenflächen der Schienen gebildeten Hohlraum vorliegen kann. Die Schnittstelle ist dadurch gekennzeichnet, dass die Vorrichtung mindestens eine Führungsfläche aufweist, wobei jede Führungsfläche mit einem spezifischen Führungsdurchmesser korrespondiert und von einer Metallbuchse gebildet wird. In einem zweiten Aspekt betrifft die Erfindung ein System, das eine vorgeschlagene Vorrichtung, sowie eine erste Schiene und eine zweite Schiene umfasst.

### Hintergrund der Erfindung:

Im Stand der Technik sind Werkzeuggeräte bekannt, die aufgrund ihres hohen Gewichts während ihres Betriebs von einem Bohrständer geführt werden. Dies gilt beispielsweise für Kernbohrgeräte, mit denen im Wesentlichen zylinderförmige Bohrkerne aus Wänden oder Mauerwerk herausgearbeitet werden. Es sind darüber hinaus viele weitere Arbeiten mit schwerem Gerät denkbar, bei denen der Benutzer eines Werkzeuggeräts davon profitieren kann, wenn die Arbeiten ständergeführt durchgeführt werden.

Bohrständer umfassen üblicherweise eine Führungsschiene. Sie können allerdings auch aus mehreren Führungsschienen zusammengefügt werden. Ferner ist bekannt, dass eine Führungsschiene mit einer Verlängerungsschiene kombiniert werden kann, um einen verlängerten Bohrständer zu erhalten. Mit einem solchen verlängerten Bohrständer können Arbeiten in einer größeren Höhe durchgeführt werden, wenn beispielsweise eine Länge einer einzelnen Führungsschiene nicht ausreicht, um eine gewünschte Höhe für die Durchführung der Arbeit zu erreichen. Darüber hinaus ermöglicht ein verlängerter Bohrständer die Arbeit mit einem längeren Werkzeug, so dass eine größere Tiefe beim Herausarbeiten der Bohrkerne erreicht werden kann.

Für die Verbindung von Bohrständerschienen ist die Verwendung von Konen bzw. konusförmigen Verbindungsmitteln weit verbreitet. Dabei befindet sich in der Regel ein weibliches Ende des Konus in der Führungsschiene des Bohrständers, während ein männliches Ende des Konus an der Verlängerungsschiene angeordnet vorliegt. Es sind im Stand der Technik auch solche Lösungen bekannt, bei denen beide Schienenstücke ein weibliches Ende aufweisen, wobei die beiden Schienenstücke über einen Doppelkonus miteinander verbunden werden können. Im Stand der Technik werden die Schienen mit den Verbindungsmitteln häufig verspannt, was zu den unten beschriebenen Bedienungsschwierigkeiten führen kann.

Der Nachteil der konventionellen Verbindungsweisen mit Konen liegt einerseits beim Gewicht und andererseits bei den hohen Herstellkosten für solche konusförmigen Verbindungsmittel. Insbesondere sind die im Stand der Technik verwendeten konusfömigen Verbindungsmittel oft sehr schwer und zu ihrer Herstellung werden große Mengen des Ausgangsmaterials benötigt. Dies führt zu den unerwünscht hohen Herstellungskosten. Ferner kann abhängig vom Konuswinkel und seiner Länge die Wandstärke an einem der Enden unerwünschterweise jeweils sehr groß werden. Darüber hinaus ist die Herstellung einer exakten Konusfläche aufwändig und kostenintensiv.

Es hat sich des Weiteren gezeigt, dass Konen bzw. konusförmige Verbindungsmittel auch bei der Bedienung Nachteile haben. Insbesondere reicht es häufig nicht aus, eine Verspannung zwischen Konus und Schienenstück zu lösen, um die Schienen voneinander zu trennen. Vielmehr müssen die Konen aktiv von den Schienen getrennt werden. Häufig kommen Spannexzenter zum Einsatz, die allerdings in zwei Richtungen wirken müssen. Dies kann bei der Verwendung des Verbindungsmittels mit einem Spannexzenter zu Verwirrung beim Nutzer führen. Darüber hinaus kann es durch unerwünschte Kaltverschweißungen an den Kontaktstellen nahezu unmöglich werden, die Konen von den Schienenstücken zu trennen.

Eine andere Variante, zwei Bohrständer-Schienen miteinander zu verbinden, besteht darin, die Zentrierung über ein zylindrisches Verbindungsmittel zu erreichen. Dabei erfolgt das Ausrichten der Schienen zueinander endgültig erst dadurch, dass die Schienenstirnflächen gegeneinander gespannt werden. Auch dieses Prinzip hat deutliche Nachteile: Besonders bei der Verwendung von Führungsschienen aus Leichtmetall (z.B. Alu-Strangpress) ist das E-Modul der Kontaktflächen zu gering, um in Kombination mit einem geringen Stützabstand ausreichend Steifigkeit für die Verbindung bzw. den Bohrständer zu bieten. Der Stützabstand hängt dabei vom Querschnitt der Führungsschiene ab und ist daher besonders bei klein bauenden Führungsschienen extrem gering.

Die Aufgabe, die der vorliegenden Erfindung zugrunde liegt, besteht darin, die vorstehend beschriebenen Nachteile des Standes der Technik zu überwinden und eine Vorrichtung zur Verbindung von Schienen eines Bohrständers bereitzustellen, die besonders anwenderfreundlich ist und bei deren Verwendung ein unerwünschtes Kaltverschweißen wirksam vermieden wird. Ferner würde es die Fachwelt begrüßen, wenn die Verbindung zwischen den Schienen bei Verwendung des bereitzustellenden Verbindungsmittels nicht aktiv gelöst werden müsste bzw. ohne ein Verspannen auskommen würde. Insbesondere wäre es wünschenswert, wenn durch die Erfindung auf die Verwendung von beidseitig wirksamen Spannexzentern verzichtet werden könnte. Darüber hinaus soll mit der Erfindung ein Bohrständer-System bereitgestellt werden, dass ebenfalls besonders anwenderfreundlich ist und darüber hinaus ein geringes Gewicht aufweist. Ferner soll die Verbindung zwischen den Bohrständer-Schienen bzw. der Bohrständer selbst eine hohe Steifigkeit aufweisen, um den täglichen Anforderungen auf einer Baustelle gewachsen zu sein.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Vorrichtung zur Verbindung einer ersten Schiene und einer zweiten Schiene vorgesehen. Die Vorrichtung kann vorzugsweise auch als Verbindung oder Schnittstelle bezeichnet werden, wobei die Schienen innen hohl ausgebildet und dazu eingerichtet sind, einen Bohrständer zur Aufnahme eines Werkzeuggeräts zu bilden, wobei die Vorrichtung im Verwendungsfall in einem von Innenflächen der Schienen gebildeten Hohlraum vorliegen kann. Die Schnittstelle ist dadurch gekennzeichnet, dass sie mindestens eine Führungsfläche aufweist, wobei die mindestens eine Führungsfläche mit einem spezifischen Führungsdurchmesser korrespondiert und von einer Metallbuchse gebildet wird. Wenn die Vorrichtung über mehr als eine Führungsfläche verfügt, ist es im Sinne der Erfindung bevorzugt, dass auch diese Führungsflächen eine Metallbuchse umfassen und jeweils mit einem eigenen Führungsdurchmesser korrespondieren. Es ist im Sinne der Erfindung bevorzugt, dass die Führungsflächen mit den Innenflächen der ersten und der zweiten Schiene so zusammenwirken, dass eine Verbindung zwischen der Vorrichtung und den Schienen in radialer Richtung erreicht wird. Weiter ist es im Sinne der Erfindung bevorzugt, dass eine Verbindung in axialer Richtung und Umfangsrichtung der ersten Schiene mit der Schnittstelle besteht. Eine solche Verbindung kann auch zwischen der Vorrichtung und der zweiten Schiene bestehen. Vorzugsweise kann die Verbindung mit Hilfe eines bevorzugt eingepressten Querstifts hergestellt werden. In einer weiteren Ausgestaltung der Erfindung kann die Vorrichtung eine Führung aufweisen, wobei die Führung Führungsflächen zur ersten Schiene aufweist. Darüber hinaus kann eine Verbindung der Vorrichtung in axialer Richtung mit der zweiten Schiene vorgesehen sein, wobei die Verbindung vorzugsweise unter Verwendung eines bevorzugt einseitig exzentrisch spannenden Stiftes erfolgt. Eine solche Verbindung kann vorzugsweise auch mit der ersten Schiene bestehen. Der Stift kann vorzugsweise dazu eingerichtet sein, die Vorrichtung mit der ersten Schiene bei Betätigung auf die zweite Schiene zu ziehen. Der Stift kann alternativ auch dazu verwendet werden, die Vorrichtung mit der zweiten Schiene bei Betätigung auf die erste Schiene zu ziehen.

Vorzugsweise bilden die beiden Schienen einen Bohrständer, mit dem die Verwendung eines Werkzeuggeräts erleichtert werden kann. Beispielsweise sind aus dem Bereich der Kernbohrgeräte Bohrständer bekannt, an denen das Kernbohrgerät während des Bohrvorgangs befestigt werden kann. Dadurch wird der Nutzer des Kernbohrgeräts erheblich entlastet, da das Gewicht des Kernbohrgeräts in diesem Fall von dem Bohrständer gehalten wird. Es ist im Sinne der Erfindung bevorzugt, dass die erste Schiene eine Führungsschiene eines Bohrständers darstellt und somit den unteren Bereich des Bohrständers bildet. Die zweite Schiene bildet vorzugsweise die Verlängerungsschiene und somit den oberen Bereich eines Bohrständers. Die zweite Schiene stellt somit ein Zubehörteil dar, das insbesondere dann benötigt wird, wenn die Länge der unteren Führungsschiene nicht ausreicht, um mit dem Kernbohrgerät auf einer gewünschten Höhe einen Bohrkern aus einer Wand oder einem Mauerwerk herauszuarbeiten oder wenn mit einem längeren Werkzeug eine größere Tiefe beim Herausarbeiten der Bohrkerne erreicht werden soll. Um die gewünschte Höhe zu erreichen, kann die Führungsschiene mit der Verlängerungsschiene verbunden werden. Als Verbindungsmittel kann insbesondere die vorgeschlagene Vorrichtung bzw. die vorgeschlagene Schnittstelle verwendet werden. Die Führungsschiene, die Verlängerungsschiene, sowie die Vorrichtung können zusammen ein System zur Bildung eines verlängerten Bohrständers bilden, wobei dieses Bohrständer-System einen zweiten Aspekt der vorgeschlagenen Erfindung darstellt. In einigen Anwendungsfällen kann die zweite Schiene auch von einer weiteren Führungsschiene gebildet werden, wenn der Bohrständer von einer ersten und einer zweiten Führungsschiene gebildet wird.

Tests haben gezeigt, dass die vorgeschlagene Schnittstelle besonders anwenderfreundlich ist und bei ihrer Verwendung die Bestandteile eines Bohrständers besonders schnell und fehlerfrei zusammengefügt werden können. Insbesondere sind keine großen Einweisungsmaßnahmen erforderlich und auch neues Personal auf einer Baustelle ist schnell in der Lage, den Bohrständer umfassend eine erste und eine zweite Schiene mit der vorgeschlagenen Vorrichtung zusammenzubauen. Die hohe Anwenderfreundlichkeit wird insbesondere dadurch erreicht, dass die Schienen durch die Verwendung der vorgeschlagenen Schnittstelle nicht mehr aktiv voneinander getrennt werden müssen, da bei der Verbindung der Schienen mit der Schnittstelle auf die Verwendung von beidseitig wirksamen Spannexzentern verzichtet werden kann. Es hat sich gezeigt, dass das vorgeschlagene Bohrständer-System ein überraschend geringes Gewicht aufweist, sowie eine überraschend hohe Steifigkeit im Vergleich zu konventionellen Systemen, deren Bestandteile mit konusförmigen Verbindungsmitteln miteinander verbunden werden.

Die erste und die zweite Schiene sind innen hohl ausgebildet sind, wobei sie vorzugsweise ein Aluminium-Strangpress-Profil umfassen können. Durch die Verwendung von Schienen, die Aluminium umfassen oder aus Aluminium hergestellt werden, kann vorteilhafterweise ein besonders leichtes Bohrständer-System bereitgestellt werden. Im Inneren der hohlen Schienen wird vorzugsweise ein Innenraum gebildet, der vorzugsweise von den Innenflächen der Schienenprofile gebildet wird. Mit anderen Worten umgeben die Innenflächen der Bohrständer-Schienen einen Hohlraum, in dem die vorgeschlagene Schnittstelle vorliegen kann, wenn sie zur Verbindung der Schienen verwendet wird. Die Schnittstelle kann vorzugsweise als Zapfen oder Zylinder ausgebildet sein, wobei sich die Außenflächen der Schnittstelle im Verwendungsfall an die Innenflächen der Schienen drücken, so dass eine Verbindung zwischen den Schienen und der Schnittstelle erhalten wird. Es ist im Sinne der Erfindung ganz besonders bevorzugt, dass insbesondere die mindestens eine Führungsfläche der Vorrichtung mit den Innenflächen der ersten und der zweiten Schiene so zusammenwirkt, dass eine Verbindung zwischen der Vorrichtung und den Schienen in radialer Richtung erreicht wird. Darüber hinaus kann eine Verbindung in axialer Richtung und Umfangsrichtung der ersten oder der zweiten Schiene mit der Vorrichtung hergestellt werden. Das kann vorzugsweise über einen eingepressten Querstift erfolgen. Ferner kann eine Führung in der Vorrichtung vorgesehen sein, die Führungsflächen zur ersten Schiene aufweist. Vorzugsweise kann auch eine Verbindung der Vorrichtung in axialer Richtung mit der zweiten Schiene erzeugt werden, die vorzugsweise über einen einseitig exzentrisch spannenden Stift erfolgt, wobei der Stift dazu eingerichtet ist, die Vorrichtung mit der ersten Schiene bei Betätigung auf die zweite Schiene zu ziehen. Alternativ kann es im Sinne der Erfindung bevorzugt sein, dass eine Verbindung der Vorrichtung in axialer Richtung mit der ersten Schiene erstellt werden kann, wobei diese Verbindung vorzugsweise über einen einseitig exzentrisch spannenden Stift erfolgt, wobei der Stift dazu eingerichtet ist, die Vorrichtung mit der zweiten Schiene bei Betätigung auf die erste Schiene zu ziehen.

Durch das Zusammenwirken von Schienen und Vorrichtung bzw. Führungsflächen der Vorrichtung wird vorteilhafterweise die Verbindung zwischen den Schienen und der Schnittstelle bewirkt bzw. erreicht.

Die Schnittstelle weist mindestens eine Führungsfläche auf, wobei es im Sinne der Erfindung besonders bevorzugt ist, dass sie zwei Führungsflächen aufweist. Die Führungsflächen korrespondieren mit einem spezifischen Führungsdurchmesser. Das bedeutet im Sinne der Erfindung bevorzugt, dass jede Führungsfläche einen eigenen Führungsdurchmesser aufweist bzw. durch einen eigenen Führungsdurchmesser charakterisiert wird. Am meisten bevorzugt ist es, wenn die Vorrichtung eine erste Führungsfläche und eine zweite Führungsfläche aufweist, wobei die erste Führungsfläche mit einem ersten Führungsdurchmesser korrespondiert, während die zweite Führungsfläche mit einem zweiten Führungsdurchmesser korrespondiert. Es ist im Sinne der Erfindung besonders bevorzugt, dass die beiden Führungsflächen zwei unterschiedliche Führungsdurchmesser aufweisen. Mit anderen Worten können die Führungsdurchmesser der beiden Führungsflächen abgesetzt voneinander sein. Vorteilhafterweise ermöglicht es der Abstand zwischen dem ersten und dem zweiten Führungsdurchmesser, dass trotz Spielpassung ein geringes Kippspiel zwischen der ersten Schiene und der zweiten Schiene gewährleistet werden kann. Dadurch können die Komponenten des Ständersystems bzw. die Schienen, insbesondere auch bei Verschmutzung, besonders leicht zusammengefügt werden.

Die Führungsflächen werden von Metallbuchsen gebildet. Dabei kann es sich beispielsweise weise um Metallringe oder Metallzylinder, insbesondere Hohlzylinder handeln. Es ist im Sinne der Erfindung insbesondere bevorzugt, dass die Metallbuchsen Stahl umfassen können oder von Stahlringen gebildet werden. Vorzugsweise umschließen die Führungsflächen an den dafür vorgesehenen Stellen die vorzugsweise hohlzylinderartig ausgebildete Vorrichtung, indem sie jeweils einen Hohlzylinder mit größerem Durchmesser bilden. Tests haben gezeigt, dass sich die Herstellungs- und Bedienungsfreundlichkeit der Schnittstelle entscheidend verbessern lässt, indem die Führung über mindestens zwei voneinander abgesetzte Führungsflächen mit leicht unterschiedlichen Durchmessern realisiert wird. Es ist im Sinne der Erfindung bevorzugt, dass ein Unterschied der Durchmesser der Führungsflächen in einem Bereich von 0,2 bis 10 mm liegt. Tests haben gezeigt, dass ein Abstand der Durchmesser der Führungsflächen von ca. mindestens 0,4 mm besonders gute Ergebnisse liefert.

Wenn die Schnittstelle eine einzige durchgehende Führungsfläche umfasst, kann die Führungsfläche beispielsweise von einer einzelnen langen Buchse mit abgesetzten Durchmessern gebildet werden. Bei der Vorsehung von mehreren Führungsflächen ist es im Sinne der Erfindung bevorzugt, dass jede von einer Buchse gebildete Führungsfläche ihren eigenen spezifischen Führungsdurchmesser aufweist.

Es ist im Sinne der Erfindung ganz besonders bevorzugt, dass die Führung der Schienen zueinander durch eine ausreichend lange, zylindrische Vorrichtung oder Schnittstelle realisiert wird. Vorzugsweise wird die Vorrichtung von einem Hohlzylinder gebildet wird, dessen Länge ℓ größer ist als der doppelte Durchmesser d des Hohlzylinders: ℓ > 2 · d. Dadurch kann ein ausreichend langer Führungsweg zur Verfügung gestellt werden, so dass eine besonders stabile Verbindung zwischen den Bohrständer-Schienen ermöglicht wird, die aber trotzdem ein gewisses Spiel zwischen den Schienen ermöglicht.

Es ist im Sinne der Erfindung bevorzugt, dass die erste Führungsfläche und die zweite Führungsfläche zueinander beabstandet angeordnet vorliegen. Mit anderen Worten weisen die Führungsflächen vorzugsweise einen Abstand zueinander auf bzw. sie sind in einem Abstand zueinander angebracht. Dadurch können die Führungsflächen insbesondere im Sinne einer Gewichtsoptimierung an der Vorrichtung angebracht werden, so dass durch die Wahl der Positionen der Führungsflächen innerhalb der Vorrichtung ein optimaler Schwerpunkt für das System aus erster Schiene, zweiter Schiene und Vorrichtung eingestellt werden kann.

Es ist im Sinne der Erfindung bevorzugt, dass die Vorrichtung einseitig fest mit entweder der ersten Schiene oder der zweiten Schiene verbunden vorliegt. Mit anderen Worten kann die Vorrichtung einseitig fest mit entweder der ersten Schiene oder der zweiten Schiene verbindbar sein. Das bedeutet im Sinne der Erfindung bevorzugt, dass ein Ende der Schnittstelle mit entweder der ersten Schiene oder der zweiten Schiene des Bohrständers fest verbunden ist. Die Schnittstelle kann beispielsweise mit einem Teilabschnitt in den Hohlraum, der von den Innenflächen der Schienen gebildet wird, eingeführt werden. Die Durchmesser der Schnittstelle und des Schienenstücks, in das ein Teilbereich der Schnittstelle eingeführt wird, sind vorzugsweise so zueinander korrespondierend ausgebildet, dass die Außenflächen der Schnittstelle so gegen die Innenflächen des Schienenstücks gedrückt werden, dass eine feste und überraschend stabile Verbindung zwischen Schiene und Schnittstelle entsteht. Es ist im Sinne der Erfindung bevorzugt, dass die mindestens eine Führungsfläche der Schnittstelle nicht in dem Teilbereich vorliegt, das in das erste oder zweite Schienenstück eingeführt werden kann. Es ist im Sinne der Erfindung vielmehr bevorzugt, dass die mindestens eine Führungsfläche in dem anderen Teilbereich der Schnittstelle vorliegt, welcher nicht fest mit einem dem Schienenstücke verbunden ist, sondern lösbar mit dem anderen Schienenstück verbunden werden kann. Mit anderen Worten liegt die mindestens eine Führungsfläche der Schnittstelle in dem Teilbereich der Schnittstelle vor, der lösbar in den Hohlraum einer Bohrständer-Schiene eingeführt oder eingesteckt werden kann. Dieser Teilbereich der Schnittstelle wird im Sinne der Erfindung bevorzugt auch als weibliches Ende oder als weibliche Seite der Schnittstelle bezeichnet. Vorzugsweise weist die Seite mit der Verlängerungsschiene keine Buchse auf. Sie wird vorzugsweise mit einer sehr engen Passung ausgeführt und kann anschließend verstiftet werden. Dadurch kann die Verschleißanfälligkeit der Vorrichtung erheblich reduziert werden. Ferner vereinfacht der Verzicht auf die Buchsen an dieser Stelle die Herstellung der Vorrichtung. Die Passung kann beispielsweise unter Verwendung einer Übergangspassung realisiert werden.

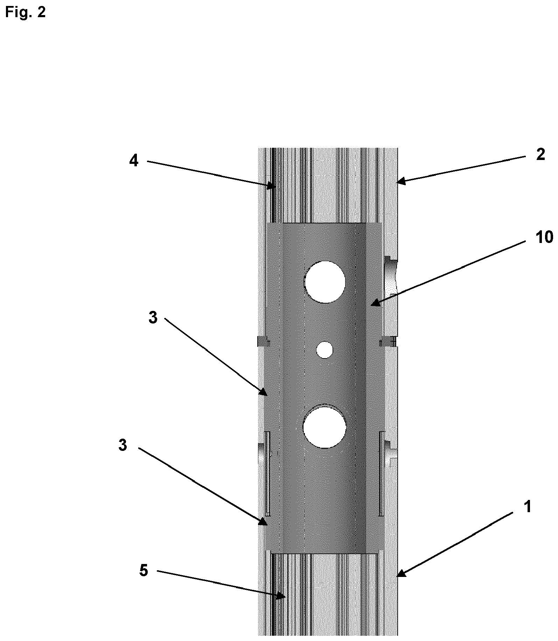

In dem in Fig. 2 dargestellten Ausführungsbeispiel der Erfindung ist die vorzugsweise zapfenförmig ausgebildete Schnittstelle einseitig fest mit der Verlängerungsschiene, also der zweiten Schiene des Bohrständers verbunden. In dem Ausführungsbeispiel in Fig. 2 hat die Schnittstelle nur einseitig Funktionsflächen, die vorzugsweise steck- und lösbar ausgebildet sind. Die einseitige Anbringung von Funktionsflächen ist im Sinne der Erfindung gleichbedeutend mit der Formulierung, dass die Führungsflächen der Schnittstelle in dem Teilbereich vorliegen, der lösbar mit einer Bohrständer-Schiene verbunden werden kann, während in dem Teilbereich der Schnittstelle, der fest mit der anderen Bohrständer-Schiene verbunden ist, vorzugsweise keine Führungsflächen vorgesehen sind. Es ist im Sinne der Erfindung bevorzugt, dass die Führungsdurchmesser der Führungsflächen auf der weiblichen Seite in der Führungsschiene gewichtsoptimiert durch zwei Stahlbuchsen bereitgestellt werden. Dadurch wird vorteilhafterweise erreicht, dass die Führungsflächen besonders wenig verschleißanfällig sind. Dieser überraschende Effekt tritt insbesondere auch dann auf, wenn die Bohrständer-Schienen selbst beispielsweise aus einem Alu-Strangpress-Profil bestehen.

Es ist im Sinne der Erfindung bevorzugt, dass die einseitig feste Verbindung zwischen der Vorrichtung und der ersten Schiene oder der zweiten Schiene dadurch bereitgestellt wird, dass ein Teilbereich der Vorrichtung mit der Innenfläche der ersten Schiene oder der zweiten Schiene zusammenwirkt. Der Teilbereich der Schnittstelle, der eine feste, d.h. insbesondere nichtlösbare Verbindung mit einer der Bohrständer-Schienen bildet, wird im Sinne der Erfindung bevorzugt auch als männliches Ende oder als männliche Seite der Schnittstelle bezeichnet.

In einem zweiten Aspekt betrifft die Erfindung ein System umfassend eine Vorrichtung nach einem der vorgehenden Ansprüche, sowie eine erste Schiene und eine zweite Schiene. Die für die Schnittstelle eingeführten Begriffe, Definitionen und technischen Vorteile gelten vorzugsweise für das Bohrständer-System analog. Das System ist dadurch gekennzeichnet, dass die erste Schiene und/oder die zweite Schiene ein Aluminium-Strangpress-Profil umfasst. Durch die Verwendung von Schienen, die Aluminium umfassen oder aus Aluminium hergestellt werden, kann ein besonders leichtes Bohrständer-System bereitgestellt werden.

Die Erfindung ist grundsätzlich mit den folgenden Vorteilen verbunden:
Die Herstellung von bevorzugt zylindrischen Schnittstellen ist kostengünstiger als die Herstellung von konusförmigen Verbindungsmitteln, wie sie im Stand der Technik verwendet werden.
Tests haben insbesondere gezeigt, dass zylindrische Schnittstellen im Vergleich zu Konen mit geringeren Wandstärken auskommen und so mit geringeren Herstellungskosten und geringerem Materialverbrauch hergestellt werden können. Zudem können die Führungsflächen beispielsweise von einzelnen Stahlringen oder Stahlhohlzylindern gebildet werden. Damit lässt sich vorteilhafterweise im Verhältnis zu einem Innenkonus aus Stahl, der durchgängig sein muss, Gewicht einsparen. Ferner lässt sich der Stützabstand im Gegensatz zum Klemmen über die Stirnflächen der Schienen nahezu beliebig vergrößern, ohne dass davon der Querschnitt der Führungsschiene beeinflusst wird.

Die Führungsflächen der Schnittstelle stellen stark beanspruchte Komponenten des Bohrständer-Systems dar. Indem die Führungsflächen innen liegend ausgebildet sind, sind sie weniger verschleißanfällig wie die Stirnfläche eines Verbindungsmittels aus dem Stand der Technik. Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung eines Bohrständers
- Fig. 2: Ansicht einer bevorzugten Ausgestaltung der Schnittstelle

### Ausführungsbeispiele und Figurenbeschreibung:

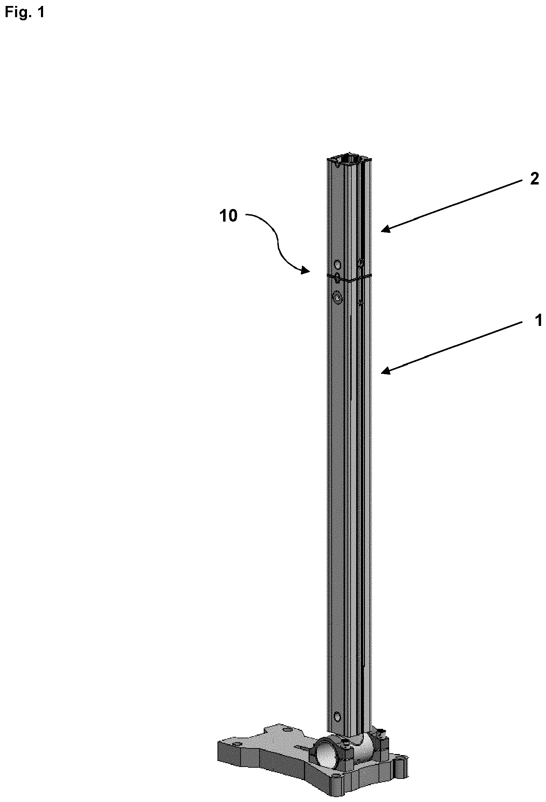

Figur 1 zeigt eine bevorzugte Ausgestaltung eines Bohrständers. Der Bohrständer umfasst eine Führungsschiene (1) und eine Verlängerungsschiene (2), wobei die Führungsschiene eine erste Schiene (1) im Sinne der Erfindung darstellt und die Verlängerungsschiene eine zweite Schiene (2) im Sinne der Erfindung darstellt. Die beiden Schienen (1, 2) können mit einer vorgeschlagenen Schnittstelle (10) miteinander verbunden werden, wobei die Schnittstelle (10) in einem Hohlraum (4) vorliegen kann. Die Schienen (1, 2) sind vorzugsweise innen hohl ausgebildet, wobei der innenliegende Hohlraum von Innenflächen (5) der Schienen (1, 2) umgeben wird. Die Führungsschiene (1), die Verlängerungsschiene (2) und die Schnittstelle (10) bilden ein Bohrständer-System, wobei der Bohrständer dazu eingerichtet ist, ein Werkzeuggerät (nicht dargestellt) zu halten oder zu führen. Vorzugsweise wird/werden die erste Schiene (1) und/oder die zweite Schiene (2) von einem Aluminium-Strangpress-Profil gebildet. Die Schnittstelle (10) kann auch von einem Hohlzylinder gebildet werden, wobei eine Länge ℓ der Schnittstelle (10) größer ist als der doppelte Durchmesser d der Schnittstelle (10).

Figur 2 zeigt eine bevorzugte Ausführungsform der vorgeschlagenen Schnittstelle (10). Die in Fig. 2 dargestellte Schnittstelle (10) umfasst zwei Führungsflächen (3), die beide in einem unteren Bereich der Schnittstelle (10) angeordnet vorliegen. Dieser untere Bereich der Schnittstelle (10) ist lösbar bzw. steckbar mit der Führungsschiene (1) verbunden. Das bedeutet im Sinne der Erfindung bevorzugt, dass der untere Bereich der Schnittstelle (10) in den Hohlraum (4) der Führungsschiene (1) eingeführt werden kann, wobei die Führungsflächen (3) der Schnittstelle (10) mit den Innenflächen (5) der Führungsschiene (1) in Eingriff gelangen, so dass eine vorzugsweise lösbare Verbindung zwischen der Führungsschiene (1) und der Schnittstelle (10) ausgebildet wird.

Der obere Bereich der Schnittstelle (10) weist vorzugsweise keine Führungsflächen (3) auf. Dieser untere Bereich der Schnittstelle (10) befindet sich in einem Hohlraum (4) der Verlängerungsschiene (2), wobei die Verlängerungsschiene (2) und die Schnittstelle (10) in dem in Fig. 2 dargestellten Ausführungsbeispiel der Erfindung fest miteinander verbunden vorliegen.

Die Führungsflächen (3) können als erste Führungsfläche (3a) und als zweite Führungsfläche (3b) ausgebildet sein, wobei die erste Führungsfläche (3a) mit einem ersten Führungsdurchmesser korrespondiert, während die zweite Führungsfläche (3b) mit einem zweiten Führungsdurchmesser korrespondiert. Vorzugsweise unterscheiden sich die Führungsdurchmesser der Führungsflächen (3a, 3b) geringfügig voneinander. Dadurch wird vorteilhafterweise ein Spiel zwischen den Bestandteilen (1, 2, 10) des Bohrständer-Systems ermöglicht.

Die Führungsflächen (3) können beispielsweise von Metallbuchsen gebildet werden. Die Metallbuchsen können zum Beispiel Stahl umfassen oder aus Stahl gebildet sein.

### Bezugszeichenliste

- 10: Schnittstelle oder Vorrichtung
- 1: erste schiene bzw. Führungsschiene
- 2: zweite Schiene bzw. Verlängerungsschiene
- 3: Führungsfläche
- 4: Hohlraum
- 5: Innenflächen

## Patentansprüche

1. Vorrichtung (10) zur Verbindung einer ersten Schiene (1) und einer zweiten Schiene (2), wobei die Schienen (1, 2) innen hohl ausgebildet sind und dazu eingerichtet sind, einen Bohrständer zur Aufnahme eines Werkzeuggeräts zu bilden, wobei die Vorrichtung (10) im Verwendungsfall in einem von Innenflächen (5) der Schienen (1, 2) gebildeten Hohlraum (4) vorliegen kann,
**dadurch gekennzeichnet, dass**
die Vorrichtung (10) mindestens eine Führungsfläche (3) aufweist, wobei die mindestens eine Führungsfläche (3) mit einem spezifischen Führungsdurchmesser korrespondiert und von einer Metallbuchse gebildet wird.

2. Vorrichtung (10) nach Anspruch 1
**dadurch gekennzeichnet, dass**
die Vorrichtung (10) von einem Hohlzylinder gebildet wird, dessen Länge ℓ größer ist als der doppelte Durchmesser d des Hohlzylinders: ℓ > 2 · d.

3. Vorrichtung (10) nach Anspruch 1 oder 2
**dadurch gekennzeichnet, dass**
die Vorrichtung (10) eine erste Führungsfläche (3a) und eine zweite Führungsfläche (3b) aufweist, wobei die erste Führungsfläche (3a) mit einem ersten Führungsdurchmesser korrespondiert, während die zweite Führungsfläche (3b) mit einem zweiten Führungsdurchmesser korrespondiert.

4. Vorrichtung (10) nach Anspruch 3
**dadurch gekennzeichnet, dass**
die erste Führungsfläche (3a) und die zweite Führungsfläche (3b) zueinander beabstandet angeordnet vorliegen.

5. Vorrichtung (10) nach einem der vorhergehenden Ansprüche
**dadurch gekennzeichnet, dass**
die Metallbuchsen Stahl umfassen.

6. Vorrichtung (10) nach einem der vorhergehenden Ansprüche
**dadurch gekennzeichnet, dass**
die Vorrichtung (10) einseitig fest mit entweder der ersten Schiene (1) oder der zweiten Schiene (2) verbindbar ist.

7. Vorrichtung (10) nach Anspruch 6
**dadurch gekennzeichnet, dass**
die einseitige feste Verbindung zwischen der Vorrichtung (10) und der ersten Schiene (1) oder der zweiten Schiene (2) dadurch bereitgestellt wird, dass ein Teilbereich der Vorrichtung (10) mit der Innenfläche (5) der ersten Schiene (1) oder der zweiten Schiene (2) zusammenwirkt.

8. System umfassend eine Vorrichtung (10) nach einem der vorgehenden Ansprüche, sowie eine erste Schiene (1) und eine zweite Schiene (2)
**dadurch gekennzeichnet, dass**
die erste Schiene (1) und/oder die zweite Schiene (2) ein Aluminium-Strangpress-Profil umfasst.
